# EUROPEAN PATENT APPLICATION

(11) **EP 4 240 082 A1**
(43) Date of publication of application: **06.09.2023**
(21) Application number: 21886061.7
(22) Date of filing: 21.10.2021
(51) Int. Cl.: H04W 72/04, H04W 28/06, H04W 84/12

(54) **COMMUNICATION DEVICE, CONTROL METHOD, AND PROGRAM**

(30) Priority: 30.10.2020 JP 2020183118
(71) Applicant: CANON KABUSHIKI KAISHA, Tokyo 146-8501 (JP)
(72) Inventor: INOHIZA Hirohiko, Tokyo 146-8501 (JP)
(74) Representative: Canon Europe Limited
(86) International application number: PCT/JP2021/038962
(87) International publication number: WO 2022/091943

(57) **Abstract**

In a case where a connection between a communication apparatus and other one communication apparatus is established via a first frequency channel and a second frequency channel, a beacon frame transmitted using the first frequency channel includes information for communication using the second frequency channel, and a FILS discovery frame or an unsolicited probe response frame transmitted using the first frequency channel does not include the information.

## Description

### Technical Field

The present invention relates to a communication apparatus configured to perform wireless communication.

### Background Art

The IEEE 802.11 standard series is known as a wireless LAN (Local Area Network) communication standard. IEEE is an abbreviation for Institute of Electrical and Electronics Engineers, and the IEEE 802.11 standard series includes standards such as IEEE 802.11a/b/g/n/ac/ax etc.

In IEEE 802.11ax described in PTL 1 includes a standard that allows an improvement in the communication speed under congestion conditions in addition to achieving a high peak throughput is standardized. The IEEE 802.11ax standard allows an AP to transmit a FILS discovery frame at a shorter interval than the beacon frame in order to notify an STA of information on wireless communication. AP is an abbreviation for Access Point, STA is an abbreviation for Station, and FILS is an abbreviation for Fast Initial Link Setup.

To further improve throughput, a task group has been established to develop a standard for IEEE 802.11be (hereafter referred to as 11be) as the successor to IEEE 802.11ax.

The conventional IEEE 802.11 standard allows an AP to establish a connection and communicate with an STA via only a single frequency channel. 11be will enable multi-Link communication, in which a single AP establishes a connection and communicates with an STA using a plurality of frequency channels.

### Citation List

### Patent Literature

PTL 1: Japanese Patent Laid-Open No. 2018-50133

### Summary of invention

### Technical problems

In order to enable Multi-Link communication according to 11be under development, it is assumed that information for performing communication using a second frequency channel is stored in a beacon frame and a FILS discovery frame transmitted using a first frequency channel. However, if the information about the second frequency channel is stored and transmitted in both a beacon frame and a FILS discovery frame transmitted in the first frequency channel, the result is an increase in the amount of information transmitted by the two frames, which can cause an increase in the communication overhead.

In view of the above problem, it is an object of the present invention to provide a technique for appropriately storing information about the frequency channel for communication in frames transmitted at predetermined intervals thereby suppressing communication overhead. Solution to problems

To achieve the above object, the present invention provides a communication apparatus capable of establishing a connection with other one communication apparatus via a first frequency channel and a second frequency channel, the communication apparatus including first transmission means configured to transmit a beacon frame at predetermined transmission intervals, and second transmission means configured to transmit a FILS discovery frame or an unsolicited probe response frame at predetermined transmission intervals shorter than when the beacon frame is transmitted, wherein when a connection is established with the other one communication apparatus via the first frequency channel and the second frequency channel, the beacon frame transmitted using the first frequency channel by the first transmission means includes information for communication using the second frequency channel, and the FILS discovery frame or the unsolicited probe response frame transmitted using the first frequency channel by the second transmission means does not include the information. Advantageous Effects of Invention

The present invention makes it possible to suppress communication overhead by appropriately storing information about the frequency channel for communication in frames transmitted at predetermined intervals.

### Brief Description of Drawings

[Fig. 1] Fig. 1 is a diagram illustrating an example of a network constructed by a communication apparatus 102.
[Fig. 2] Fig. 2 is a diagram illustrating an example of a hardware configuration of a communication apparatus 102 or 103.
[Fig. 3] Fig. 3 is a diagram illustrating an example of a functional configuration of the communication apparatus 102 or 103.
[Fig. 4] Fig. 4 is a sequence diagram illustrating an example of processing executed when the communication apparatus 102 communicates with the communication apparatus 103 via a plurality of links.
[Fig. 5] Fig. 5 is a flowchart illustrating processing executed when the communication apparatus 102 executes a multi-link communication or a single-link communication.
[Fig. 6] Fig. 6 is a flowchart illustrating processing executed when the communication apparatus 102 transmits a frame in executing a single-link communication.
[Fig. 7] Fig. 7 is a flowchart illustrating processing executed when the communication apparatus 102 transmits a frame in executing a multi-link communication.

### Description of Embodiments

Embodiments of the present invention are described in detail below with reference to the accompanying drawings. Note that configurations shown in the following embodiments are merely examples, and the present invention is not limited to these configurations illustrated below.

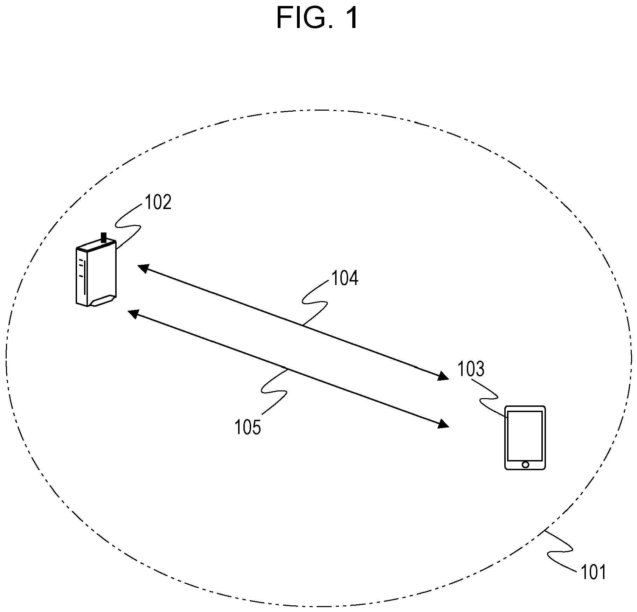

Fig. 1 illustrates a configuration of a network in which an AP (Access Point) 102 according to the present embodiment participates. The communication apparatus 102 is a communication apparatus that serves to establish a network 101. Note that the network 101 is a wireless network.

An STA (Station) 103 is a communication apparatus that participates in the network 101. Each communication apparatus supports the IEEE 802.11be (EHT) standard, and can perform wireless communication according to the IEEE 802.11be standard via the network 101. Note that IEEE is an abbreviation for Institute of Electrical and Electronics Engineers. EHT is an abbreviation for Extremely High Throughput. Note that EHT may be interpreted as an abbreviation for Extreme High Throughput. Each communication apparatus is capable of communicating in frequency bands of 2.4 GHz band, 5 GHz band, and 6 GHz band. The frequency bands used by each communication apparatus are not limited to those, and other different frequency bands such as a 60 GHz band may be used. Each communication apparatus may use a bandwidth of 20 MHz, 40 MHz, 80 MHz, 160 MHz, or 320 MHz in communication.

The communication apparatus 102 and the communication apparatus 103 can perform multi-user (MU) communication in which signals of a plurality of users are multiplexed by executing OFDMA communication according to the IEEE 802.11be standard. OFDMA is an abbreviation for Orthogonal Frequency Division Multiple Access. In the OFDMA communication, a part of the divided frequency bands (RU, Resource Unit) is assigned to each STA such that there is no overlap and carrier waves assigned to the respective STA are orthogonal. This makes it possible for the AP to communicate with a plurality of STAs in parallel.

The communication apparatus 102 and the communication apparatus 103 establish links via a plurality of frequency channels thereby performing multi-link communication. The AP that performs multi-link communication is also called an AP MLD (Multi-Link Device). Here, the frequency channel refers to a frequency channel defined by the IEEE 802.11 series standard and capable of executing wireless communication according to the IEEE 802.11 series standard. In the IEEE 802.11 series standards, a plurality of frequency channels are defined in each of the 2.4 GHz, 5 GHz, and 6 GHz frequency bands. According to the IEEE 802.11 series standards, 20 MHz is allocated as a bandwidth to each of frequency channels. By bonding adjacent frequency channels, a bandwidth of 40 MHz or greater may be used in one frequency channel. For example, the communication apparatus 102 may establish a first link 104 with the STA 103 via a first frequency channel in the 2.4 GHz band and a second link 105 via a second frequency channel in the 5 GHz band, thereby making it possible to communicate with the communication apparatus 103 via both links. In this case, the communication apparatus 102 maintains the second link 105 via the second frequency channel in parallel with the first link 104 via the first frequency channel. In this manner, the communication apparatus 102 can improve throughput in communication with the communication apparatus 103 by establishing links with the communication apparatus 103 via a plurality of frequency channels. Note that the communication apparatus 102 and the communication apparatus 103 may establish a plurality of links with different frequency bands in multi-link communication. For example, the communication apparatus 102 and the communication apparatus 103 may establish a third link in the 6 GHz band in addition to the first link 104 in the 2.4 GHz band and the second link 105 in the 5 GHz band. Alternatively, links may be established via a plurality of different channels included in the same frequency band. For example, a first link 104 via 1ch in the 2.4 GHz band and a second link 105 via 5ch in the 2.4 GHz band may be established. Note that it is also allowed to establish a mixture of links in the same frequency band and links in different frequency bands. For example, the communication apparatus 102 and the communication apparatus 103 may establish a third link via 36ch in the 5 GHz band in addition to the first link 104 via 1ch in the 2.4 GHz band and the second link 105 via 5ch in the 2.4 GHz band. If a plurality of connections with the communication apparatus 103 in different frequency bands are established, then even when one band is congested, the communication apparatus 102 can communicate with the communication apparatus 103 via a different band, and thus it is possible to prevent the throughput from decreasing in communication with the communication apparatus 103.

In the multi-link communication, the plurality of links established between the communication apparatus 102 and the communication apparatus 103 are assumed to be different at least in the frequency channel. In the multi-link communication, the frequency channel spacing of the plurality of links established between the communication apparatus 102 and the communication apparatus 103 is assumed to be at least greater than 20 MHz. In the present embodiment described above, it is assumed that the communication apparatus 102 and the communication apparatus 103 establish the first link 104 and the second link 105, but three or more links may be established.

Note that when multi-link communication is executed, the communication apparatus 102 establishes a plurality of wireless networks corresponding to the respective links. In this case, the communication apparatus 102 has a plurality of internal APs and operates so as to establish wireless networks for the respective APs. The APs provided inside the communication apparatus 102 may be one or more physical APs, or may be a plurality of virtual APs configured on one physical AP. When a plurality of links are established in frequency channels belonging to a common frequency band, the plurality of links may use a common wireless network.

When multi-link communication is performed, the communication apparatus 102 and the communication apparatus 103 divide one piece of data and transmit the divided pieces of data to the partner apparatus via the plurality of links. Alternatively, the communication apparatus 102 and the communication apparatus 103 each may transmit the same data via the plurality of links such that communication via one link serves as backup communication for the communication via the other link. More specifically, the communication apparatus 102 may transmit to the communication apparatus 103 the same data via a first link in a first frequency channel and via a second link in a second frequency channel. In this case, for example, even if an error occurs in communication via the first link, the communication apparatus 103 can receive the data transmitted from the communication apparatus 102 because the same data is transmitted via the second link. Alternatively, the communication apparatus 102 and the communication apparatus 103 may use different links depending on the type of frames and the type of data to be transmitted. For example, the communication apparatus 102 may transmit a management frame via the first link and a data frame containing data via the second link. Note that the management frame refers specifically to a beacon frame, a probe request frame/response frame, or an association request frame/response frame. In addition to these frames, a disassociation frame, an authentication frame, a de-authentication frame, and an action frame are also called management frames. The beacon frame is a frame for providing network information. The probe request frame is a frame for requesting network information, and the probe response frame is a frame to provide network information in response to the probe request frame. The association request frame is a frame for requesting a connection, and the association response frame is a frame that indicates, in response to the association request frame, a permission for the connection, an error, or the like. The disassociation frame is a frame for disconnecting a connection. The authentication frame is a frame for authenticating a partner apparatus, and the de-authentication frame is a frame for interrupting the authentication of the partner apparatus and disconnecting the connection. The action frame is a frame for performing an additional function other than those described above. The communication apparatus 102 and the communication apparatus 103 transmit and receive a management frame according to the IEEE 802.11 series standards. Alternatively, for example, when data related to a captured image is transmitted, the communication apparatus 102 may transmit meta information such as date/time data, parameters (regarding an aperture value and a shutter speed and/or the like), and position information via the first link, and pixel information via the second link.

The communication apparatus 102 and the communication apparatus 103 may be capable of performing MIMO (Multiple-Input And Multiple-Output) communication. In this case, the communication apparatus 102 and the communication apparatus 103 each have a plurality of antennas, and one of the communication apparatus transmits different signals from the respective antennas using the same frequency channel. The receiving apparatus simultaneously receives all signals arriving via a plurality of streams using the plurality of antennas, and separates the signals of the respective streams and decodes them. The executing of the MIMO communication in the above-described manner makes it possible for the communication apparatus 102 and the communication apparatus 103 to communicate more data in the same time period than when the MIMO communication is not executed. When the communication apparatus 102 and the communication apparatus 103 perform multi-link communication, the MIMO communication may be performed using only a part of links.

To broadcast network information, the communication apparatus 102 may transmit a FILS discovery frame and/or an unsolicited probe response frame in addition to the beacon frame. FILS is an abbreviation for Fast Initial Link Setup. The beacon frame includes information for communication in a frequency channel in which the beacon frame is transmitted, such as the transmission interval of the beacon frame and information about the frequency channel available for the transmission of the beacon frame, and information for the STA, which establishes the connection with the AP, to achieve time synchronization. The FILS discovery frame is an action frame that contains information about a beacon frame transmission interval, an SSID (Service Set Identifier) of an AP that transmits the FILS discovery frame, etc. The beacon frame is transmitted repeatedly at predetermined transmission intervals, and the FILS discovery frame and/or the unsolicited probe response frame are transmitted at shorter intervals than the transmission interval of the beacon frame.

The communication apparatus 102 may also include information about a plurality of APs in a reduced neighbor report (RNR) element of the FILS discovery frame or the beacon frame. The information about the plurality of APs is information for communication using a link 1 and information for communication using a link 2 in a case where a communication apparatus communicates via the link 1 and the link 2. More specifically, the RNR element may include information on the operating class of each AP, channel information, and beacon frame transmission timing. When multi-link communication is performed, the communication apparatus 102 may store, in the RNR element of the FILS discovery frame or beacon frame, in addition to the information described above, information about APs of respective links by which the multi-link communication is performed. The information about the APs of the respective links includes, in addition to information for communication in the link in which the FILS discovery frame and the beacon frame are transmitted, information for communication in another different link. Note that the FILS discovery frame contains less information than the beacon frame.

The communication apparatus 102 may store, in the unsolicited probe response frame, information similar to that included in a normal probe response frame. Note that unlike the normal probe response frame, the unsolicited probe response frame is a frame autonomously transmitted by the communication apparatus 102 at predetermined transmission intervals. The communication apparatus 102 supporting multi-link communication may store, in the unsolicited probe response frame, the RNR element including information about the APs of the respective links forming the multilink used by the communication apparatus 102. The information about the APs of the respective links includes, in addition to the information for communication in the link in which the unsolicited probe response frame is transmitted, information for communication in another different link.

The IEEE 802.11ax standard stipulates that when an AP operates in the 6 GHz band, the AP may transmit a FILS discovery frame and/or an unsolicited probe response frame at intervals of 20 TUs. Note that TU is an abbreviation for Time Unit, and 1 TU corresponds to 1 ms. In this case, the AP transmits the FILS discovery frame and/or the unsolicited probe response frame at intervals shorter than the beacon frame transmission interval of 100 TUs.

In a case where the communication apparatus 102 establishes a plurality of links including the 6 GHz band, it is needed to transmit a FILS discovery frame in addition to the beacon frame. Therefore, when the 6 GHz band is included in the frequency bands used in the multi-link communication, if information about the multi-link communication is stored in both frames described above and transmitted, the sizes of both frames increase and the communication throughput decreases. To handle this situation, according to the present embodiment, the communication apparatus 102 appropriately sets the information stored in the frames based on whether a multi-link communication is being performed, thereby suppressing a reduction in communication throughput.

It is assumed above that the communication apparatus 102 and the communication apparatus 103 support the IEEE 802.11be standard. In addition to or instead of the IEEE 802.11be standard, the communication apparatus 102 and the communication apparatus 103 may also support at least one of the legacy standards prior to the IEEE 802.11be standard. The legacy standards include the IEEE 802.11a /b/g/n/ac/ax standards. In the present embodiment, at least one of the IEEE 802.11a/b/g/n/ac/ax/be standards and successor standards is referred to as an IEEE 802.11 series standard. In addition to the IEEE 802.11 series standards, other communication standards such as Bluetooth (registered trademark), NFC, UWB, Zigbee, MBOA, and/or the like may be supported. UWB is an abbreviation for Ultra Wide Band, and MBOA is an abbreviation for Multi Band OFDM Alliance. OFDM is an abbreviation for Orthogonal Frequency Division Multiplexing. NFC is an abbreviation for Near Field Communication. UWB includes wireless USB, wireless 1394, Winet, etc. A communication standard for wired communication such as a wired LAN may be supported.

Specific examples of the communication apparatus 102 include, but are not limited to, a wireless LAN router and a PC. Any communication apparatus may be used as the communication apparatus 102 as long as it can execute multi-link communication with other one communication apparatus. Specific examples of the communication apparatus 103 include, but are not limited to, a camera, a tablet device, a smartphone, a PC, a mobile phone, a video camera, etc. Any communication apparatus may be used as the communication apparatus 103 as long as it can execute multi-link communication with other one communication apparatus. The network shown in Fig. 1 includes one AP and one STA, but the number of APs and the number of STAs are not limited to one.

Note that in the present embodiment, the communication apparatus 102 functions as an AP and the communication apparatus 103 functions as an STA, but both the communication apparatus 102 and the communication apparatus 103 may function as stations. In this case, although the communication apparatus 102 functions as a station, the communication apparatus 102 operates as an apparatus responsible for configuring a wireless network for establishing a link with the communication apparatus 103.

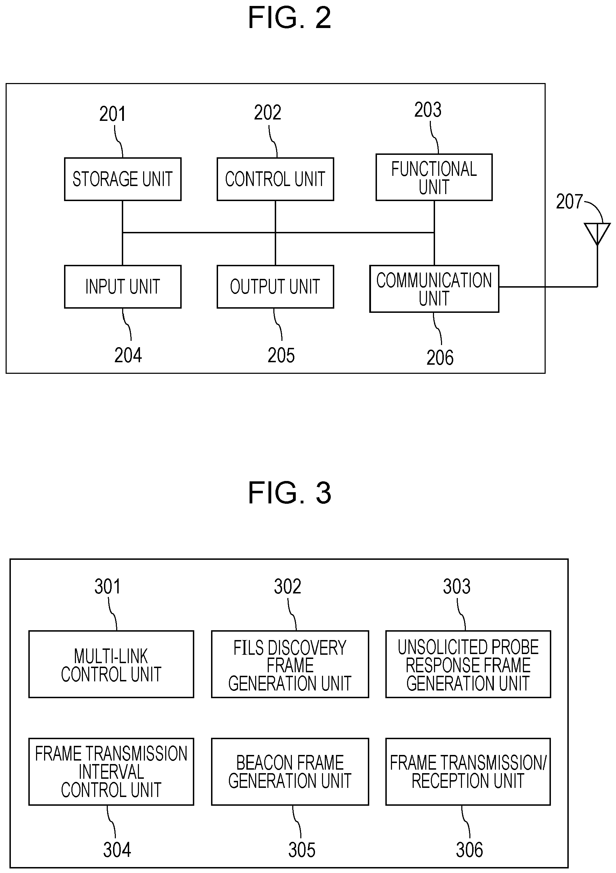

Fig. 2 illustrates an example of a hardware configuration of the communication apparatus 102 or 103. The communication apparatus 102 includes a storage unit 201, a control unit 202, a functional unit 203, an input unit 204, an output unit 205, a communication unit 206, and an antenna 207.

The storage unit 201 includes one or more memories such as a ROM, a RAM and/or the like, and serves to store a computer program for performing various operations described later and various kinds of information such as a communication parameter for wireless communication. ROM is an abbreviation for Read Only Memory, and RAM is an abbreviation for Random Access Memory. Examples of the storage unit 201 include, in addition to memories such as a ROM, a RAM or the like, a storage medium such as a flexible disk, a hard disk, an optical disk, a magneto-optical disk, a CD-ROM, a CD-R, a magnetic tape, a non-volatile memory card, and a DVD. The storage unit 201 may include a plurality of memories or the like.

For example, the control unit 202 includes one or more processors such as a CPU, an MPU and/or the like, and controls the entire communication apparatus 102 by executing a computer program stored in the storage unit 201. The control unit 202 may control the entire communication apparatus 102 in cooperation with the computer program stored in the storage unit 201 and the OS (Operating System). The control unit 202 generates data or a signal (a wireless frame) to be transmitted in communication with other one communication apparatus. CPU is an abbreviation for Central Processing Unit, and MPU is an abbreviation for Micro Processing Unit. The control unit 202 may include a plurality of processors such as a multi-core processor, and the plurality of processors may control the entire communication apparatus 102.

The control unit 202 controls the functional unit 203 to execute predetermined processing such as wireless communication, imaging, printing, projecting, or the like. The functional unit 203 is hardware used by the communication apparatus 102 to execute a predetermined process.

The input unit 204 accepts various operations by a user. The output unit 205 provides various outputs to the user via a monitor screen and/or a speaker. The outputs by the output unit 205 may be provided by displaying information on a monitor screen, audio information via a speaker, or providing a vibration, or the like. Note that the input unit 204 and the output unit 205 may be integrated in one module as in a touch panel. The input unit 204 and the output unit 205 may be respectively integrated with the communication apparatus 102 or may be separate from the communication apparatus 102.

The communication unit 206 controls wireless communication in accordance with the IEEE 802.11be standard. The communication unit 206 may control wireless communication according to other IEEE 802.11 series standards in addition to the IEEE 802.11be standard, or may control wired communication such as a wired LAN. The communication unit 206 controls the antenna 207 to transmit and receive signals for wireless communication generated by the control unit 202. The communication apparatus 102 may include a plurality of communication units 206. The communication apparatus 102 including the plurality of communication units 206 establishes at least one link for each communication unit 206 when a plurality of links are established in multi-link communication. Alternatively, the communication apparatus 102 may establish a plurality of links using one communication unit 206. In this case, the communication unit 206 performs communication via the plurality of links by switching frequency channels in a time division manner. In a case where the communication apparatus 102 supports the NFC standard, the Bluetooth standard, and/or the like in addition to the IEEE 802.11be standard, wireless communication may be controlled in accordance with these communication standards. In a case where the communication apparatus 102 is capable of executing wireless communication according to a plurality of communication standards, communication units and antennas may be provided separately for the respective communication standards. The communication apparatus 102 communicates data such as image data, document data, and video data with the communication apparatus 103 via the communication unit 206. The antenna 207 may be provided separately from the communication unit 206, or may be integrated with the communication unit 206 in a single module.

The antenna 207 is an antenna capable of performing communication in the 2.4 GHz band, 5 GHz band, and 6 GHz band. It is assumed in the present embodiment that the communication apparatus 102 has one antenna, but the communication apparatus 102 may have a plurality of antennas for the respective frequency bands. In the case where the communication apparatus 102 has a plurality of antennas, the communication apparatus 102 may have a plurality of communication units 206 corresponding to the respective antennas.

Fig. 3 illustrates an example of a functional configuration of the communication apparatus 102. The communication apparatus 102 includes a multi-link control unit 301, a FILS discovery frame generation unit 302, and an unsolicited probe response frame generation unit 303. The communication apparatus 102 further includes a frame transmission interval control unit 304, a beacon frame generation unit 305, and a frame transmission/reception unit 306.

The multi-link control unit 301 controls whether the communication apparatus 102 performs multi-link communication or single-link communication. The single-link communication refers to a communication performed such that the communication apparatus 102 establishes only a single link and performs the communication using it. The determination as to whether the communication apparatus 102 performs multi-link communication may be set by a user, or may be determined by the communication apparatus 102 according to a channel usage state.

The FILS discovery frame generation unit 302 generates a FILS discovery frame depending on the multi-link communication by the communication apparatus 102 or the frequency band used by the communication apparatus 102.

The unsolicited probe response frame generation unit 303 generates an unsolicited probe response frame depending on the multi-link communication by the communication apparatus 102 or the frequency band used by the communication apparatus 102.

The frame transmission interval control unit 304 controls transmission intervals of beacon frames, FILS discovery frames, and unsolicited probe response frames transmitted by the communication apparatus 102. The beacon frames are transmitted at transmission intervals of 100 TUs, while the FILS discovery frames and the unsolicited probe response frames are transmitted at intervals shorter than 100 TUs.

The beacon frame generation unit 305 generates a beacon frame. The beacon frame includes an unsolicited probe responses active subfield, which includes information indicating whether to transmit an unsolicited probe response frame. The unsolicited probe responses active subfield is included in a neighbor report element and an RNR element. The beacon frame may include an RNR element containing AP information related to links for the multi-link communication used by the communication apparatus 102.

The frame transmission/reception unit 306 controls transmission/reception of management frames such as beacon frames, FILS discovery frames, and unsolicited probe response frames, and controls transmission/reception of control frames, and data frames.

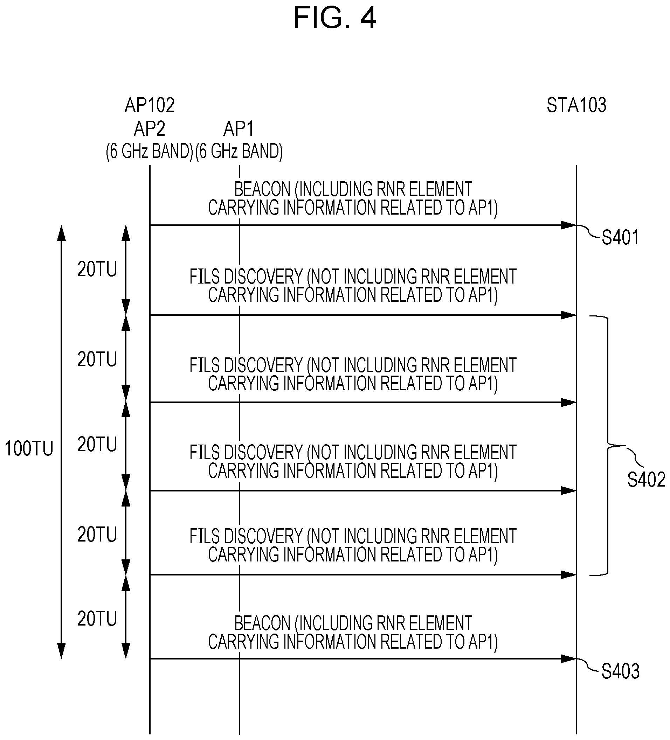

Fig. 4 is a sequence diagram illustrating processing executed when the communication apparatus 102 communicates with the communication apparatus 103 via a plurality of links. The processing of this sequence is started when the power of the communication apparatus 102 is turned on. Alternatively, the processing may be started in response to a user instructing the communication apparatus 102 to perform a multi-link communication. The communication apparatus 102 operates an AP1 and an AP2 to perform multi-link communication with the communication apparatus 103. Note that the AP1 and AP2 operate in the 6 GHz band using frequency channels different from each other.

The communication apparatus 102 transmits a beacon frame using the AP2 (S401). The beacon frame transmitted in S401 includes an RNR element containing information for communication by the AP1 in addition to information for communication by the AP2. Next, the communication apparatus 102 transmits, using the AP2, a FILS discovery frame that contains information for communication using the AP2 but does not contain information for communication using the AP1 (S402). That is, the FILS discovery frame transmitted here does not include an RNR element. The communication apparatus 102 transmits FILS discovery frames at intervals of 20 TUs, but the transmission interval does not need to be 20 TUs. In addition, a bit may be added to the FILS discovery frame to indicate that the communication apparatus 102 is in operation of a multi-link communication to notify that information about the AP1, that is information on another link, is stored in the beacon frame. When 100 TUs have elapsed since the previous transmission of a beacon frame, the communication apparatus 102 stores the information about the AP1, which is information for communication in another link, in the RNR element in the AP2, and transmits the beacon frame again (S403). In this sequence, it is assumed that the communication apparatus 102 uses the AP2. However, the sequence may be performed using the AP1.

In the present embodiment described above, the information for communication using another link is stored in the RNR element, but it can be stored anywhere in the FILS discovery frame and the beacon frame.

That is, when the communication apparatus 102 performs a multi-link communication, in addition to the information for communication using a link stored in the beacon frame, information for communication using another link is stored in an RNR element of the beacon frame. The beacon frame transmitted here includes information about a plurality of links used for the multi-link communication, and this results in an increase in communication overhead. On the other hand, the FILS discovery frame does not include an RNR element including information for communication using other links, which results in a reduction in the communication overhead. In the present embodiment, it is assumed that the communication apparatus 102 transmits a FILS discovery frame. However, the communication apparatus 102 may transmit an unsolicited probe response frame at least instead of one FILS discovery frame.

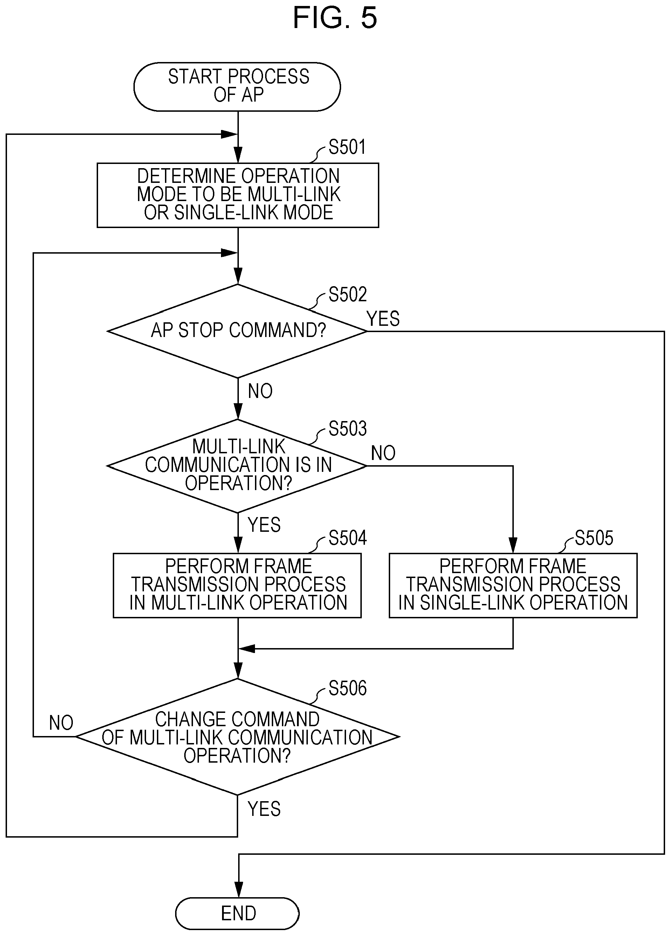

Fig. 5 is a flowchart illustrating a flow of processing performed by the communication control unit 202 by executing a program stored in the storage unit 201 of the communication apparatus 102 when the communication apparatus 102 performs multi-link or single-link communication.

This flowchart starts when the power of the communication apparatus 102 is turned on. Alternatively, the flowchart may be started in response to a user instructing the communication apparatus 102 to start communication.

First, the communication apparatus 102 determines that its operation mode is a multi-link communication mode or a single-link communication mode (S501). Whether the communication apparatus 102 performs the multi-link communication or single-link communication is determined by the user. Alternatively, the communication apparatus 102 may autonomously determine whether to perform multi-link communication or single-link communication based on the state of frequency channels and frequency bands, the size of data to be communicated, and/or the like. Alternatively, an AP may determine whether to perform multi-link or single-link communication based on a request from an STA or the communication status of the STA.

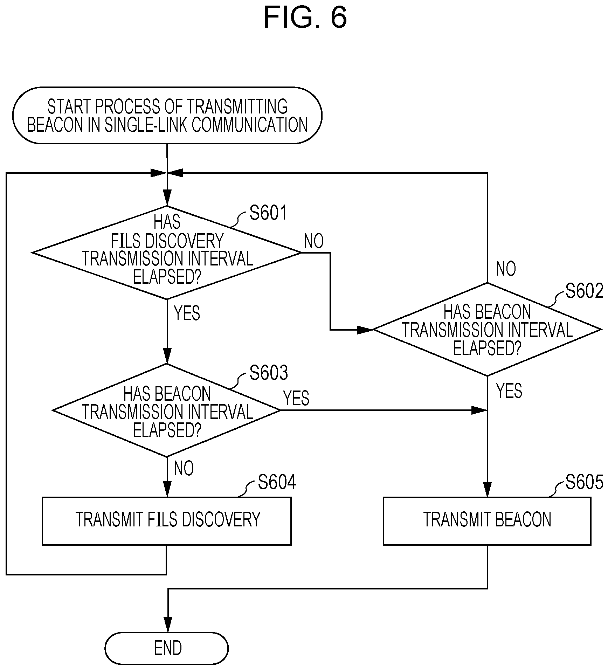

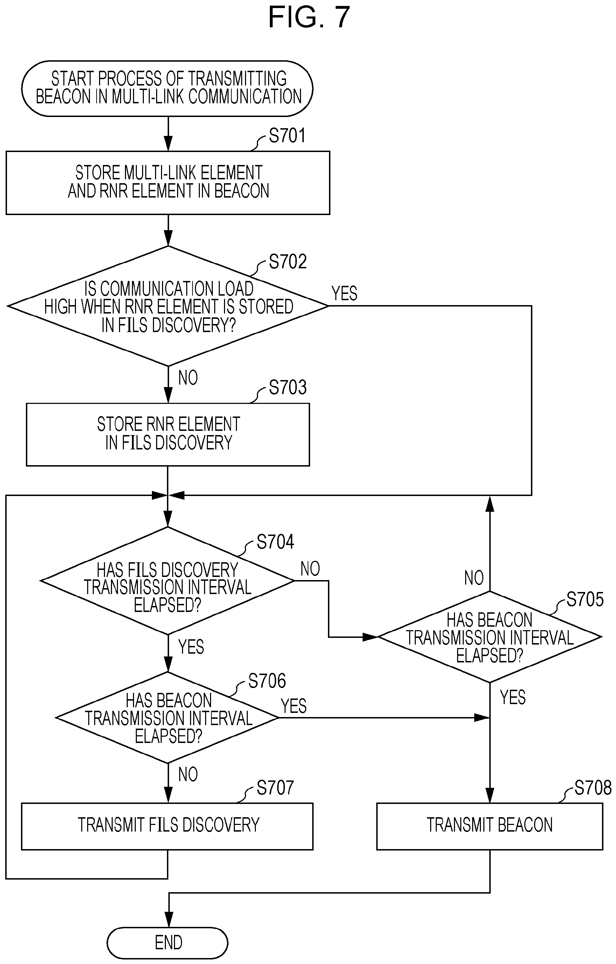

Next, the communication apparatus 102 determines whether an AP stop instruction has been received (S502). More specifically, the communication apparatus 102 determines whether the user has instructed the communication apparatus 102 to stop its operation as an AP. In a case where stopping is instructed in S502, the communication apparatus 102 stops operating as the AP and terminates the processing according to this flowchart. In a case where stopping is not instructed in S502, the communication apparatus 102 determines whether the communication apparatus 102 is in a multi-link communication operation (S503). That is, the determination is made as to whether multi-link communication is in operation. In a case where it is determined in S503 that the communication apparatus 102 is in a multi-link communication operation, the answer of this step is Yes, and the process proceeds to S504 to perform a frame transmission process in the multi-link communication. In a case where it is determined in S503 that the communication apparatus 102 is not in the multi-link communication operation, that is, in a case where it is determined that the communication apparatus 102 is in a single-link communication operation, the communication apparatus 102 performs a frame transmission process in the single-link communication (S505). The detailed flow in S504 and S505 will be described later with reference to Fig. 6 and Fig. 7.

After the communication apparatus 102 performs the process in S504 or S505, the communication apparatus 102 determines whether a change regarding the multi-link communication is instructed (S506). More specifically, the communication apparatus 102 determines whether the communication apparatus 102 has received an instruction from a user to perform the multi-link communication. Alternatively or additionally, the communication apparatus 102 may determine whether the communication apparatus 102 has received an instruction from the user to change the frequency channel, the frequency band, the mode, the number of links and/or the like of the multi-link communication. Instead of receiving these change instructions from the user, the communication apparatus 102 may autonomously make the change based on the state of the communication being performed, the state of the frequency channel, and/or the like. In a case where the communication apparatus 102 determines that the communication apparatus 102 has received a change instruction, or in a case where the communication apparatus 102 autonomously determines to make a change, the communication apparatus 102 performs the process in S501 again. In a case where it is determined that the change instruction is not received, or in a case where the communication apparatus 102 autonomously determines not to make a change, the communication apparatus 102 performs the process in S502. The timing of performing the process in S502 is not limited to this timing, but may be any timing in the flowchart.

Fig. 6 is a flowchart illustrating a processing flow performed by the communication control unit 202 by executing a program stored in the storage unit 201 of the communication apparatus 102 in the single-link communication.

The processing of this flowchart is started in response to the communication apparatus 102 starting the processing in S505 in Fig. 5.

First, the communication apparatus 102 determines whether the transmission interval of the FILS discovery frame has elapsed since the last transmission of a beacon frame or a FILS discovery frame (S601). In a case where it is determined in S601 that the transmission interval has not elapsed, the communication apparatus 102 determines whether the beacon frame transmission interval has elapsed since the last transmission of a beacon frame (S602). The beacon frame transmission interval of the communication apparatus 102 is preset to 100 TUs in the communication apparatus 102. Alternatively, any transmission interval may be set by the user. In a case where it is determined in S602 that the beacon transmission interval of the communication apparatus 102 has elapsed, the communication apparatus 102 transmits a beacon frame (S605). In a case where it is determined in S602 before proceeding to S506 in Fig. 5 that the beacon transmission interval has not elapsed, the communication apparatus 102 performs S601 again.

In a case where it is determined in S601 that the transmission interval has elapsed, the communication apparatus 102 determines whether the transmission interval of the beacon frame has elapsed (S603). In a case where it is determined in S603 that the beacon transmission interval has not elapsed, the communication apparatus 102 transmits a FILS discovery frame (S604). After the process in S604 is performed, the communication apparatus 102 performs the determination in S601 again. In a case where it is determined in S603 that the beacon transmission interval of the communication apparatus 102 has elapsed, the communication apparatus 102 transmits, in S605, a beacon frame. After that, the present processing according to the flowchart is ended.

In Fig. 6, it is assumed by way of example that a FILS discovery frame is transmitted, but an unsolicited probe response frame may also be transmitted.

In the present embodiment, when the communication apparatus 102 performs single-link communication, the RNR element that stores information for communication in other links is not included in either the FILS discovery frame or the beacon frame.

Fig. 7 is a flowchart illustrating a processing flow performed by the communication control unit 202 by executing a program stored in the storage unit 201 of the communication apparatus 102 in the multi-link communication.

The processing of this flowchart is started in response to the communication apparatus 102 starting the processing in S504 in Fig. 5.

First, the communication apparatus 102 stores, in a beacon frame, a multilink element that indicates operation information of the multi-link communication and an RNR element that includes AP information of links other than the link in which the beacon frame is transmitted (S701). The information for communication via the link in which the beacon frame is transmitted is stored in EHT capability or other elements of the beacon frame, but it may be stored anywhere within the beacon frame. Next, the communication apparatus 102 determines whether the communication load between the communication apparatus 102 and the communication apparatus 103 is high when the FILS discovery frame includes the RNR element containing information for the communication via other links (S702). The load of communication between the communication apparatus 102 and the communication apparatus 103 when the RNR element is stored in the FILS discovery frame is determined based on whether the size of the FILS discovery frame is greater than a predetermined threshold value. Alternatively, the determination in S702 is made based on whether the number of links established between the communication apparatus 102 and the communication apparatus 103 is greater than a predetermined threshold value. Alternatively, the communication apparatus 102 makes the determination in S702 based on whether the transmission interval of FILS discovery frames is smaller than a predetermined threshold value. In a case where it is determined in S702 that the load of communication between the communication apparatus 102 and the communication apparatus 103 is high, the communication apparatus 102 determines in S704 whether the transmission interval of FILS discovery frames has elapsed. In a case where it is determined in S702 that the communication load between the communication apparatus 102 and the communication apparatus 103 is low, the communication apparatus 102 stores the RNR element in the FILS discovery frame (S703). Whether the determination in S702 is made based on the FILS discovery frame size, the number of links, or the transmission interval of FILS discovery frames may be determined by the user or based on a setting made in advance in the communication apparatus 102. Alternatively, the communication apparatus 102 may perform the three determinations described above. In this case when at least one of the determination results is Yes, the communication apparatus 102 may determine Yes in this step. The predetermined threshold value for FILS discovery frames, the predetermined threshold value for the number of links, and the threshold value for the transmission interval of FILS discovery frames may all be stored in a non-volatile memory in the communication apparatus 102, or they may be set by the user.

Note that a bit may be added to the FILS discovery frame to indicate that the communication apparatus 102 is in operation of a multi-link communication to notify that information for communication in other links is stored in the beacon frame.

The processing in S704 to S708 is similar to the processing in S601 to S605 in Fig. 6. After the beacon frame is transmitted in S708, the process proceed to S506 in Fig. 5.

In Fig. 7, it is assumed that a FILS discovery frame is transmitted, but this is merely an example and an unsolicited probe response frame may be transmitted.

The determination in S702 and the process in S703 may be skipped. In this case, in the multi-link communication, regardless of the load in transmitting a FILS discovery frame, the communication apparatus 102 does not store an RNR element representing information for communication in other links in the FILS discovery frame.

The processes shown in the flowcharts in Figs. 5 to 7 may be executed when the communication apparatus 102 operates only in the 6 GHz band, and may not be executed when the communication apparatus 102 operates in the 2.4 GHz band and/or the 5 GHz band. Alternatively, the communication apparatus 102 may perform the processes shown in Figs. 5 to 7 when at least one AP operates in the 6 GHz band.

In Figs. 5 to 7, processes other than the beacon frame transmission process are omitted, but this is merely an example. The communication apparatus 102 may perform processing such as transmission and reception of a data frame, transmission and reception of another management frame or control frame, in parallel with or between steps shown in Figs. 5 to 7.

According to the present embodiment, it becomes possible for the communication apparatus 102 to suppress communication overhead by appropriately storing information for communication using other frequency channels in frames transmitted at predetermined transmission intervals and controlling the transmission of those frames.

At least a part or all of the flowchart performed by the communication apparatus 102 shown in Figs. 5 to 7 may be performed by hardware. To use hardware for this purpose, for example, a dedicated circuit may be generated on an FPGA based on a computer program for realizing the steps using, for example, a particular complier, and the resultant dedicated circuit may be used. FPGA is an abbreviation for Field Programmable Gate Array. Alternatively, a gate array circuit may be formed in a similar manner to the FPGA thereby achieving the above-described use of hardware. Alternatively, an ASIC (Application Specific Integrated Circuit) may be used for the above-described purpose.

A software program code for realizing the above-described functions may be stored in a storage medium and this storage medium may be supplied to a system or an apparatus, and a computer (a CPU, an MPU) of the system or the apparatus may read and execute the software program stored in storage medium. In this case, the program code read from the storage medium implements the functions of the embodiments described above, and the storage medium in which the program code is stored construct the apparatus described above.

Examples of the storage medium for supplying the program code include a flexible disk, a hard disk, an optical disk, a magneto-optical disk, a CD-ROM, a CD-R, a magnetic tape, a non-volatile memory card, a ROM, a DVD, etc.

In addition to the realization of the functions described above by a computer by reading and executing the program code, the functions may also be realized by an OS on which the computer runs by executing part or all of actual processing according to an instruction of the program code. OS is an abbreviation for Operating System.

Furthermore, the functions described above may be realized such that the program code is loaded from a storage medium into a memory provided on a function extension board inserted in a computer or provided in a function extension unit connected to the computer, and part or all of the actual processing may be performed by a CPU disposed on the function extension card or the function extension unit in accordance with an instruction of the loaded program code.

The present invention may also be implemented by providing a program for realizing one or more functions of the embodiment to a system or an apparatus via a network or a storage medium, and reading out and executing the program by one or more processors in a computer disposed in the system or the apparatus. The present invention may also be implemented by a circuit (for example, ASIC) that realizes one or more functions.

The present invention is not limited to the above-described embodiments, but various changes and modifications can be made without departing from the spirit and scope of the present invention. Therefore, the following claims are appended to make the scope of the present invention public.

This application claims the benefit of Japanese Patent Application No. 2020-183118 filed October 30, 2020, which is hereby incorporated by reference herein in its entirety.

## Claims

1. A communication apparatus capable of establishing a connection with other one communication apparatus via a first frequency channel and a second frequency channel, the communication apparatus comprising:
first transmission means configured to transmit a beacon frame at predetermined transmission intervals; and
second transmission means configured to transmit a FILS discovery frame or an unsolicited probe response frame at predetermined transmission intervals shorter than when the beacon frame is transmitted,
wherein when a connection is established with the other one communication apparatus via the first frequency channel and the second frequency channel, the beacon frame transmitted using the first frequency channel by the first transmission means includes information for communication using the second frequency channel, and the FILS discovery frame or the unsolicited probe response frame transmitted using the first frequency channel by the second transmission means does not include the information.

2. The communication apparatus according to Claim 1, further comprising determination means configured to determine a communication load between the communication apparatus and the other one communication apparatus when the connection is established with the other one communication apparatus via the first frequency channel and the second frequency channel,
wherein in a case where the determination means determines that the communication load is high, the beacon frame transmitted using the first frequency channel by the first transmission means includes information for communication using the second frequency channel, and the FILS discovery frame or the unsolicited probe response frame transmitted using the first frequency channel by the second transmission means does not include the information.

3. The communication apparatus according to Claim 2, wherein the determination means determines the communication load based on a size of the FILS discovery frame when the information is stored in the FILS discovery frame or the unsolicited probe response frame,
and in a case where the determination means determines that the size of the FILS discovery frame or the unsolicited probe response frame is larger than a predetermined value, the beacon frame transmitted using the first frequency channel by the first transmission means includes information for communication using the second frequency channel, and the FILS discovery frame or the unsolicited probe response frame transmitted using the first frequency channel by the second transmission means does not include the information.

4. The communication apparatus according to Claim 2 or 3, wherein the determination means determines the communication load based on a number of frequency channels in the connection established between the communication apparatus and the other one communication apparatus,
and in a case where the determination means determines that the number of frequency channels is greater than a predetermined value, the beacon frame transmitted using the first frequency channel by the first transmission means includes information for communication using the second frequency channel, and the FILS discovery frame or the unsolicited probe response frame transmitted using the first frequency channel by the second transmission means does not include the information.

5. The communication apparatus according to one of Claims 2 to 4, wherein the determination means determines the communication load based on the transmission interval of the FILS discovery frame or the unsolicited probe response frame transmitted by the second transmission means,
and in a case where the determination means determines that the transmission interval of the FILS discovery frame or the unsolicited probe response frame is smaller than a predetermined value, the beacon frame transmitted using the first frequency channel by the first transmission means includes information for communication using the second frequency channel, and the FILS discovery frame or the unsolicited probe response frame transmitted using the first frequency channel by the second transmission means does not include the information.

6. The communication apparatus according to one of Claims 1 to 5, wherein the information is included in an RNR (Reduced Neighbor Report) element of the beacon frame.

7. The communication apparatus according to one of Claims 1 to 6, wherein the FILS discovery frame or the unsolicited probe response frame or the beacon frame includes information on a network constructed by a communication apparatus that transmits the frame.

8. The communication apparatus according to one of Claims 1 to 7, wherein the first frequency channel and the second frequency channel are each one of channels of the 2.4 GHz, 5 GHz, and 6 GHz bands.

9. The communication apparatus according to one of Claims 1 to 8, wherein the communication apparatus operates as an AP (Access Point) according to IEEE 802.11 series standards.

10. A communication method capable of establishing a connection with other one communication apparatus via a first frequency channel and a second frequency channel, the communication method comprising:
performing a first transmission process to transmit a beacon frame at predetermined transmission intervals; and
performing a second transmission process to transmit a FILS discovery frame or an unsolicited probe response frame at predetermined transmission intervals shorter than when the beacon frame is transmitted,
wherein in a case where a connection is established with the other one communication apparatus via the first frequency channel and the second frequency channel, the beacon frame transmitted using the first frequency channel by the first transmission process includes information for communication using the second frequency channel, and the FILS discovery frame or the unsolicited probe response frame transmitted using the first frequency channel by the second transmission process does not include the information.

11. A program for causing a computer to function as each means of the communication apparatus according to one of Claims 1 to 9.
